# EUROPEAN PATENT SPECIFICATION

(11) **EP 0 468 753 B1**
(45) Date of publication and mention of the grant of the patent: **15.11.1995**
(21) Application number: 91306717.9
(22) Date of filing: 23.07.1991
(51) Int. Cl.: B60Q 1/04

(54) **Mounting structure for a lamp base for an automobile**
Montageeinrichtung für ein Lampengehäuse in einem Fahrzeug
Dispositif de montage pour boîtier de lampe dans un véhicule

(30) Priority: 23.07.1990 JP 194458/90
(43) Date of publication of application: 29.01.1992
(73) Proprietor: Kato Hatsujyo Co., Ltd., Yokohama-shi Kanagawa-ken (JP)
(72) Inventor: Sasamoto, Masayoshi 604 Towa Tounhaitaun,4-16, Hiroshima-shi Hiroshima-ken (JP)
(74) Representative: West, Alan Harry

(56) References cited:
- US-A- 4 758 932

## Description

This invention relates to a fastner and more particularly a fastner which can be used for mounting a lamp base on the surface of a body panel of an automobile.

The prior art includes, for example, Japanese Laid-Open Utility Model Application No. 63-37448.

JP-U-63-37448 describes a fastner in which a plurality of engagement projections are provided on one side of a lamp base, at least one of which is formed by a metallic pivot. The engagement projections are inserted into and engaged with the receiving aperture portions of the vehicle body. A bolt mounting portion is provided on the other side of the lamp base and is fastened to the vehicle body by a bolt.

This type of fastner is such that the lamp base engages with the surface of the vehicle body by means of the projections formed integrally with the lamp base and by means of the bolt mounting portion provided on the lamp base whereby the lamp base is secured to the vehicle body. Unfortunately, a method which requires the use of a bolt to secure the lamp base lacks mass productivity and moreover involves a great number of mounting steps.

Further, bolt-fastening is required for each lamp base which is a time consuming process. Thus, bolt-fastening is not desirable in an assembly-line operation.

US 4,861,208 describes a fastening assembly for securing a door trim panel to a door body inner panel. The assembly comprises a female member which is removably securable to the door body inner panel, and a male member which is releasably attachable to the female member and is securable to the door trim panel by means of a slide-fit attachment.

The present invention has been made in view of the above-described problems of the prior art with the object of providing a fastener which eliminates the step of bolt-fastening and in which a fixed resinous clip is provided on a lamp base to enable the lamp base to be mounted and removed in a one-step operation such as pressing or sliding.

Accordingly, the present invention provides a fastening system for fastening a body to a panel, comprising:
(i) a plurality of first members adapted for location in apertures in a panel;
(ii) a plurality of restraining frames on the surface of a body to be fastened to the panel; and
(iii) at least one second connector member configured to form a press-fit releasable attachment to the first member and a sliding-fit attachment to the restraining frame, said fastening system further comprising
(iv) at least one first connector member configured to form a press-fit locking attachment to the first member and a sliding-fit attachment to the restraining frame,
   the panel and body each including first and second plane surfaces angled with respect to each other, and the system including at least one first member on each plane surface of the panel, at least one restraining frame on each plane surface of the body, at least one first connector member for locking attachment to said at least one first member and for attachment to said at least one restraining frame on the first plane surfaces of the panel and body respectively, and at least one second connector member for releasable attachment to a first member and for attachment to a restraining frame on the second plane surfaces of the panel and body respectively.

Fastener components for use in the above described fastening system are provided also. The components comprise
(i) a first member adapted for location in an aperture formed in a panel;
(ii) a restraining frame adapted for attachment to the surface of a body to be fastened to the panel; and
(iii) a second connector member configured to form a press-fit releasable attachment to the first member and a sliding-fit attachment to the restraining frame, characterised in that the components further comprise
(iv) a first connector member configured to form a press-fit locking attachment to the first member and a sliding-fit attachment to the restraining frame.

Further, there is provided a method for fastening a body to a panel, the body and panel each including first and second plane surfaces angled with respect to each other, the method using a plurality of fasteners, each fastener including
(i) a first member adapted for location in an aperture formed in a panel;
(ii) a restraining frame adapted for attachment to the surface of a body to be fastened to the panel; and
(iii) a connector member configured to form a press-fit attachment to the first member and a sliding-fit attachment to the restraining frame, the method comprising
   locating first members in apertures provided on each of the first and second plane surfaces of the panel, and attaching connector members to the first members located on the first plane surface of the panel;
   providing restraining frames on the first and second plane surfaces of the body and attaching connector members to the restraining frames of the second plane surface of the body; and
   pressing together the body and the panel such that the connector members attached to the first members on the first plane surface of the panel become attached to the restraining frames provided on the first plane surface of the body and the connector members attached to the restraining frames on the second plane surface of the body become attached to the first members on the second plane surface of the panel, whereby the body is fastened to the panel.

An embodiment of the present invention will be described in more detail, by way of example only, with reference to the accompanying drawings in which:
Figure 1 is an enlarged view of a fastener for a lamp base for an automobile according to the present invention;
Figures 2A and 2B are a front view and a top plan view, respectively, of a first member;
Figures 3A and 3B are a front view and a top plan view, respectively, of a first connector member;
Figures 4A and 4B are a front view and a side cross-sectional view, respectively, of a second connector member;
Figure 5 illustrates the manner in which the pillar of the first connector member is mounted on a restraining frame;
Figure 6 illustrates the manner in which the pillar of the second connector member is mounted on a restraining frame;
Figure 7 illustrates the manner in which a lamp base is removed from a vehicle body; and
Figure 8 illustrates the manner in which the lamp base is slidably mounted on a vehicle body.

The fastner according to the present invention can be used for mounting a lamp base on the outer peripheral surface of a vehicle body panel. The first members are mounted in apertures in the vehicle body panel and first connector members are mounted on restraining frames formed on the front face portion of the lamp base. A second connector member is inserted in a first member mounted on a side portion of the vehicle body panel. The lamp base is pressed in one direction to removably mount the lamp base.

Suitably, the restraining frames are molded integrally with the back of the lamp base. Further, the restraining frames are provided with a slide path for slidably receiving the first connector member, and a receiving groove formed in its upper surface for retaining the first connector member.

The first members are pre-mounted in the apertures in the vehicle body panel, and the first connector members are mounted on the front face portion of the lamp base. By pressing the lamp base, the lamp base can be fixed at a predetermined location and mounted very simply.

Also, if the first members and the second connector member are mounted on a side portion of the panel then by sliding the lamp base, the second connector member is inserted into the restraining frame, whereby the lamp base can be stably fixed to the panel.

Also, the restraining frames are formed on the back of the lamp base, each of which is formed with a slide path and a receiving groove for receiving the first connector member therein so as to exert a holding force when mounting the lamp base.

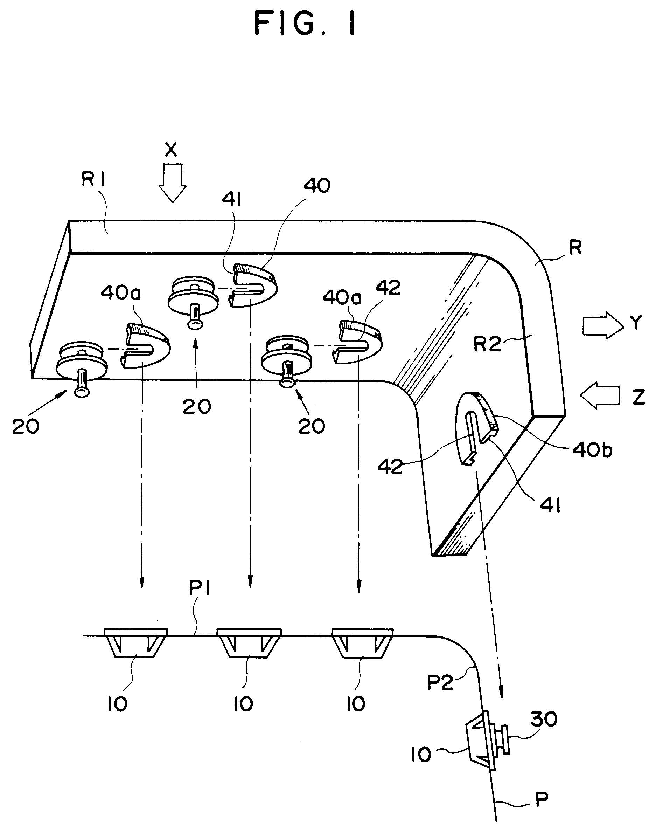

In Figure 1, the letter R designates a lamp base, R1 denotes its front face portion, and R2 designates the side portion thereof. The letter P denotes a vehicle body panel, P1 designates its front face portion, and P2 denotes the side portion thereof. The reference numeral 10 designates first members, the reference numeral 20 denotes first connector members, and the reference numeral 30 designates a second connector member.

A feature of the present invention is that in a fastner for mounting the lamp base R on the outer peripheral surface of the vehicle body panel P, the first members 10 are mounted in apertures formed at predetermined locations in the vehicle body panel P. The connector members 20 are mounted on restraining frames 40 formed on the lamp base R, and the second connector member 30 is inserted in a first member 10 mounted on the side portion P2 of the vehicle body panel P. The lamp base R is, then, pressed in the direction of arrow X and, thereby, fixedly mounted to the vehicle body panel.

The side portion P2 of the vehicle body panel P extends in a direction orthogonal to the direction of insertion of the connector members 20 into the restraining frames 40.

A second feature of the present invention is that the restraining frames 40 are formed on the lamp base R at locations corresponding to the locations of the mounting apertures in the vehicle body panel P. Each of the restraining frames are formed with a slide path 42 and a groove 43 for receiving the connector members 20 or the connector member 30.

The vehicle body panel P has a planar front surface P1 and second planar surface P2 and a curved intermediate edge. The first members are inserted in the elliptical holes apertures which are formed in the panel P at predetermined intervals.

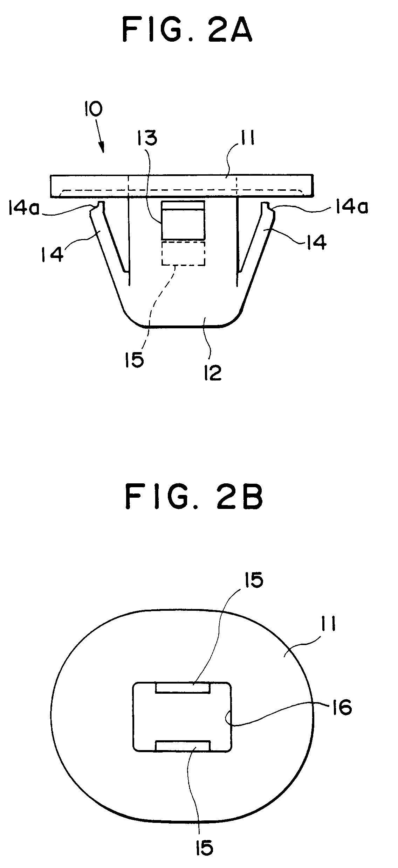

Figure 2A is a front view of the first member 10, and Figure 2B is a top plan view thereof.

The first member 10 is a unitary molded article formed of synthetic resin, particularly an industrial material having resilient properties, such as polyacetal or polyamide resin.

The first member 10 comprises an elliptical flange 11, a rectangular holding portion 12 depending from the underside of the flange 11, a restraining portion 13 provided on the elongate portion of the holding portion 12, and legs 14 extending from the restraining portion 13, the free end of each leg 14 being formed with a fixing portion 14a.

A bore 16 extends from the surface of the flange portion 11 to the bottom of the holding portion 12, and protruding fitting portions 15 are formed centrally on the opposite inner walls of the bore 16.

The first member 10 is engaged with the marginal edge of a panel mounting aperture by the restraining portion 13 and the fixing portions 14a, and is secured with the legs 14 centered on the central portion of the aperture.

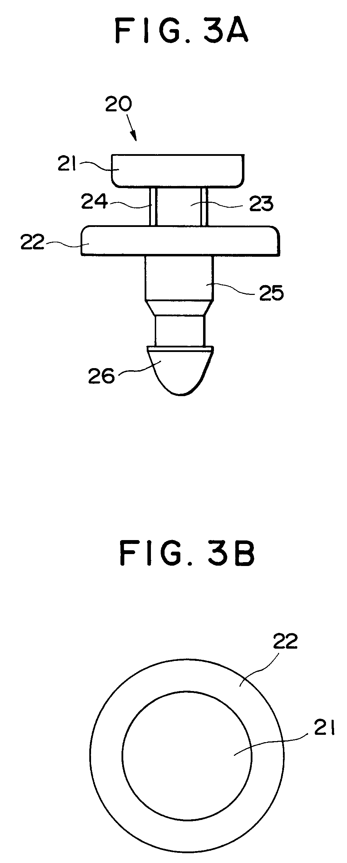

Figure 3A is a front view of the first connector member 20, and Figure 3B is a top plan view thereof.

The first connector member 20 is also unitarily molded of the same resin material as the first member 10. The connector member 20 has two circular thin-walled parallel flanges 21 and 22 connected by a pillar 23 having a protruding portion 24. The member 20 comprises also a leg 25 protruding in one direction, the tip of the leg 25 providing a diametrically enlarged restraining portion 26.

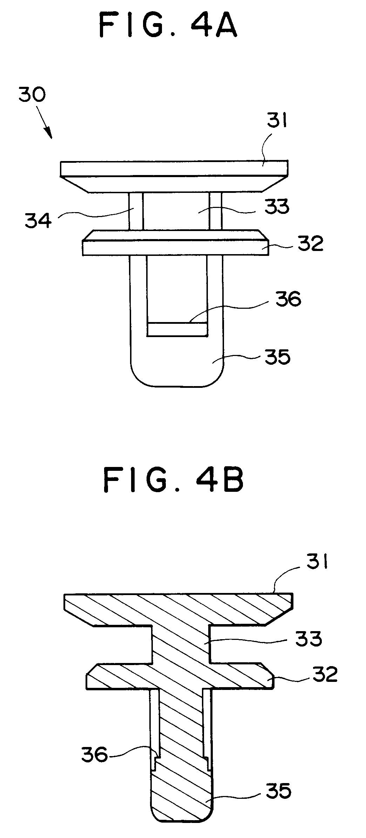

Figure 4A is a front view of the second connector member 30, and Figure 4B is a side cross-sectional view thereof.

The second connector member 30 is of substantially the same shape as the connector member 20, except for the shape of the leg.

Thus, the connector member 30 comprises two parallel flanges 31 and 32, a pillar 33 having a protruding portion 34 connecting the flanges, and a leg 35 extending from the surface of the pillar 33, the leg 35 being formed with a planar recess 36 for receiving the fitting portion 15 of the first member 10.

The lamp base R is molded to conform to the outer shape of the vehicle body panel P to which it is to be attached. The lamp base R is formed of a resin material, and contains a bulb (not shown) which can be selectively turned on and off.

The restraining frames 40 for receiving the first and second connector members 20, 30 are molded integrally with the back of the lamp base R at locations corresponding to the mounting apertures on the panel P.

Restraining frames 40a formed on the front face R1 of the lamp base R are disposed while deviating in the widthwise direction (the direction of the shorter side) relative to the surface of the lamp base R. Each of the restraining frames 40a is formed with a portion 41 for receiving the flanges 21 and 22 therein. The slide path 42 along which the pillar member 23 passes, is formed with receiving grooves 43 which engage the protruding portions 24 of the pillar member 23.

A restraining frame 40b formed on the side portion R2 of the lamp base R, which corresponds in shape to the side portion P2 of the vehicle panel P, has its slide path 42 facing in a direction orthogonal to the direction of the slide path 42 of the restraining frame 40a. A groove 43 for receiving the protruding portion 34 of the pillar 33 is formed in the innermost part of this slide path 42.

When it is desired to mount, the lamp base R on the vehicle body panel P, the first members 10 are first inserted into the mounting apertures in the vehicle body panel P. This also applies to the front face portion P1 and the side portion P2.

Subsequently, the first connector members 20 are inserted into the respective restraining frames 40a of the front face portion R1 of the lamp base R through the slide paths 42. The second connector members 30 are inserted into the first members 10 mounted on the side portion P2 of the vehicle body panel P.

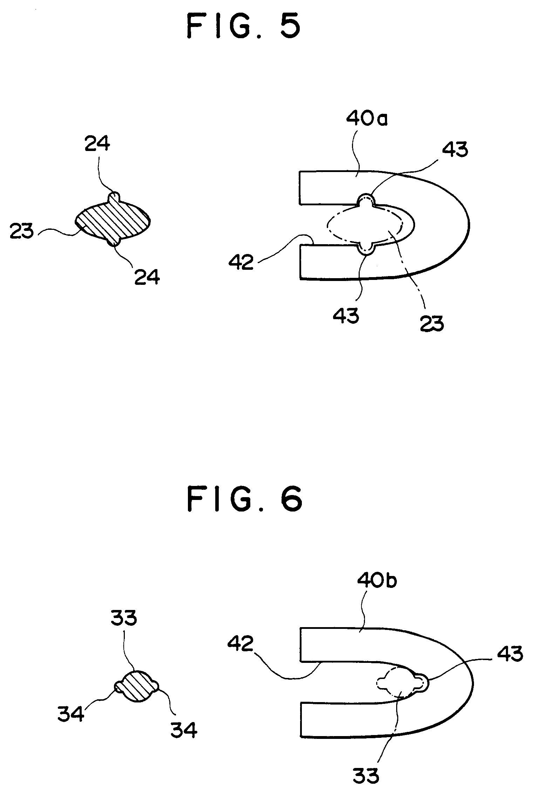

Figure 5 illustrates the manner in which the connector member 20 is inserted into the restraining frame 40a, and Figure 6 illustrates the manner in which the connector member 30 is inserted into the restraining frame 40b.

The protruding portions 24 formed on the pillar of the first connector member 20 advance along the slide path 42 and are fixedly engaged with the receiving grooves 43 to secure the connector member 20 to the restraining frame 40a.

Similarly, for the second connector members 30, the protruding portion 34 is inserted into the receiving groove 43 formed in the innermost part of the slide path 42.

When the lamp base R is pushed in the direction of arrow X, with the connector members 20 not mounted solely on the side portion R2 of the lamp base R as described above, the connector members 20 are pushed into the bores 16 in the first members 10.

Also, the restraining frame 40b formed on the side portion R2 of the lamp base R engages between flanges 31 and 32 of the second connector member 30 premounted on the first member 10.

Thus, simply by the pressing step alone, the lamp base R can be mounted on the surface of the panel P.

Thus, this one step mounting operation is a very useful an assembly-line operation.

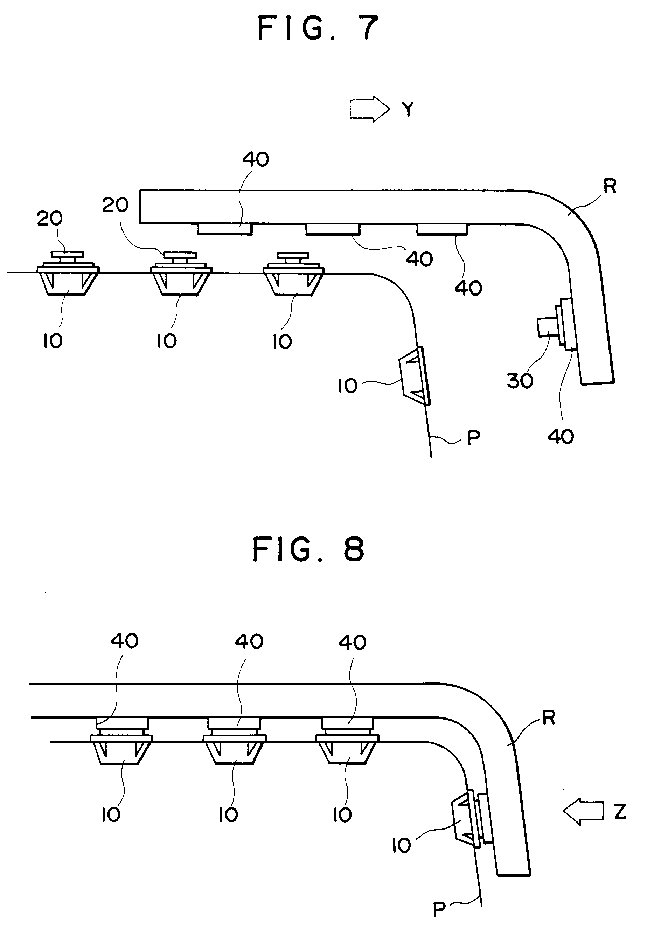

Figure 7 illustrates the manner in which the lamp base R is removed.

If as shown, the lamp base R is moved in the direction of arrow Y, the connector member 30 disengages from the first member 10 but is retained by the restraining frame 40. The connector members 20 remain engaged with the first members 10 on the surface of the panel P.

Figure 8 illustrates the manner in which the lamp base as it is in the state shown in Figure 7 is again mounted on the surface of the panel P.

By pressing the lamp base R in the direction of arrow Z, the lamp base can be again fixed to the surface of the panel P, and thus, it is possible to mount and remove the lamp base R in a sliding operation.

As is apparent from the foregoing description, the present invention provides a fastner for mounting a lamp base on the outer peripheral surface of a vehicle body panel wherein first members are mounted in mounting apertures in the vehicle body panel and first connector members are mounted on restraining frames formed on the front face portion of the lamp base, and with a second connector member inserted in a first member mounted on a side portion of said vehicle body panel, the lamp base is pressed in one direction to removably mount the lamp base. Therefore, in an assembly-line operation for the assembly of vehicle bodies, the mounting of the lamp bases can be accomplished solely by a simple pressing-sliding step. This is very efficient.

Also, each restraining frame is formed with a slide path and a receiving groove, which enables the members to be stably fixed. Thus, the lamp base can be secured by solely pressing. This is advantageous also in terms of an assembly-line operation.

In addition, the restraining frames differ in their mounted positions in the widthwise direction of the lamp base and therefore, the fixing of the lamp base becomes stable.

Further, the lamp base can be removed, simply by pulling the base from the panel. In this way, the use of a mechanical jig hitherto necessary for bolt-fastening is avoided and therefore, there is no possibility of damaging the lamp base, the members and other devices during assembly.

## Claims

1. A fastening system for fastening a body (R) to a panel (P), comprising:
(i) a plurality of first members (10) adapted for location in apertures in a panel (P);
(ii) a plurality of restraining frames (40) on the surface of a body (R) to be fastened to the panel (P); and
(iii) at least one second connector member (30) configured to form a press-fit releasable attachment to the first member (10) and a sliding-fit attachment to the restraining frame (40), characterised by further comprising
(iv) at least one first connector member (20) configured to form a press-fit locking attachment to the first member (10) and a sliding-fit attachment to the restraining frame (40),
the panel (P) and body (R) each including first and second plane surfaces angled with respect to each other, and the system including at least one first member (10) on each plane surface of the panel (P), at least one restraining frame (40) on each plane surface of the body (R), at least one first connector member (20) for locking attachment to said at least one first member (10) and for attachment to said at least one restraining frame (40a) on the first plane surfaces of the panel (P) and body (R) respectively, and at least one second connector member (30) for releasable attachment to a first member (10) and for attachment to a restraining frame (40b) on the second plane surfaces of the panel (P) and body (R) respectively.

2. Fastener components for use in the fastening system of claim 1, the components comprising:
(i) a first member (10) adapted for location in an aperture formed in a panel (P);
(ii) a restraining frame (40) adapted for attachment to the surface of a body (R) to be fastened to the panel (P); and
(iii) a second connector member (30) configured to form a press-fit releasable attachment to the first member (10) and a sliding-fit attachment to the restraining frame (40), characterised by further comprising
(iv) a first connector member (20) configured to form a press-fit locking attachment to the first member (10) and a sliding-fit attachment to the restraining frame (40).

3. A method for fastening a body (R) to a panel (P), the body (R) and panel (P) each including first and second plane surfaces angled with respect to each other, the method using a plurality of fasteners, each fastener including
(i) a first member (10) adapted for location in an aperture formed in a panel (P);
(ii) a restraining frame (40) adapted for attachment to the surface of a body (R) to be fastened to the panel (P); and
(iii) a connector member (20;30) configured to form a press-fit attachment to the first member (10) and a sliding-fit attachment to the restraining frame (40), the panel (P) and the body (R) each including first and second plane surfaces angled with respect to one another, the method comprising the steps of
locating first members (10) in apertures provided on each of the first and second plane surfaces of the panel (P), and attaching connector members (20;30) to the first members located on the first plane surface of the panel (P);
providing restraining frames (40) on the first and second plane surfaces of the body (R) and attaching connector members (20;30) to the restraining frames of the second plane surface of the body (R); and
pressing together the body (R) and the panel (P) such that the connector members (20;30) attached to the first members on the first plane surface of the panel (P) become attached to the restraining frames (40) provided on the first plane surface of the body (R) and the connector members (20;30) attached to the restraining frames (40) on the second plane surface of the body (R) become attached to the first members on the second plane surface of the panel (P), whereby the body (R) is fastened to the panel (P).

## Patentansprüche

1. Befestigungssystem zum Befestigen eines Körpers (R) an einer Platte (P), das umfaßt:
(i) eine Vielzahl erster Elemente (10), die in Öffnungen in einer Platte (P) angeordnet werden können;
(ii) eine Vielzahl von Haltefassungen (40) an der Oberfläche eines an der Platte (P) zu befestigenden Körpers(R); und
(iii) wenigstens ein zweites Verbindungselement (30), das so aufgebaut ist, daß es eine lösbare Preßpaßanbringung an dem ersten Element (10) und eine Gleitpaßanbringung an der Haltefassung (40) bildet, **dadurch gekennzeichnet**, daß es des weiteren umfaßt
(iv) wenigstens ein erstes Verbindungselement, das so aufgebaut ist, daß es eine arretierende Preßpaßanbringung an dem ersten Element (10) und eine Gleitpaßanbringung an der Haltefassung (40) bildet,
wobei die Platte (P) und der Körper (R) jeweils eine erste und eine zweite plane Fläche enthalten, die winklig zueinander sind, und das System wenigstens ein erstes Element (10) an jeder planen Fläche der Platte (P), wenigstens eine Haltefassung (40) an jeder planen Fläche des Körpers (R), wenigstens ein erstes Verbindungselement (20) zur arretierenden Anbringung an dem wenigstens einen ersten Element (10) und zur Anbringung an der wenigstens einen Haltefassung (40a) an der ersten planen Fläche der Platte (P) bzw. des Körpers (R) enthält, sowie wenigstens ein zweites Verbindungselement (30) zur lösbaren Anbringung an einem ersten Element (10) und zur Anbringung an einer Haltefassung (40b) an der zweiten planen Fläche der Platte (P) bzw. des Körpers (R).

2. Befestigungsbauteile zum Einsatz in dem Befestigungssystem nach Anspruch 1, wobei die Bauteile umfassen:
(i) ein erstes Element (10), das in einer in einer Platte (P) ausgebildeten Öffnung angeordnet werden kann;
(ii) eine Haltefassung (40), die an der Oberfläche eines an der Platte (P) zu befestigenden Körpers (R) angebracht werden kann; und
(iii) ein zweites Verbindungselement (30), das so aufgebaut ist, daß es eine lösbare Preßpaßanbringung an dem ersten Element (10) und eine Gleitpaßanbringung an der Haltefassung (40) bildet, **dadurch gekennzeichnet**, daß sie des weiteren umfassen
(iv) ein erstes Verbindungselement (20), das so aufgebaut ist, daß es eine arretierende Preßpaßanbringung an dem ersten Element (10) und eine Gleitpaßanbringung an der Haltefassung (40) bildet.

3. Verfahren zum Befestigen eines Körpers (R) an einer Platte (P), wobei der Körper (R) und die Platte (P) jeweils eine erste und eine zweite plane Fläche enthalten, die winklig zueinander sind, wobei bei dem Verfahren eine Vielzahl von Befestigungsvorrichtungen eingesetzt werden, wobei jede Befestigungsvorrichtung enthält
(i) ein erstes Element (10), das in einer in einer Platte (P) ausgebildeten Öffnung angeordnet werden kann;
(ii) eine Haltefassung (40), die an der Oberfläche eines an der Platte (P) zu befestigenden Körpers (R) angebracht werden kann; und
(iii) ein Verbindungselement (20; 30), das so aufgebaut ist, daß es eine Preßpaßanbringung an dem ersten Element (10) und eine Gleitpaßanbringung an der Haltefassung (40) bildet, wobei die Platte (P) und der Körper (R) jeweils eine erste und eine zweite plane Fläche enthalten, die winklig zueinander sind, wobei das Verfahren die folgenden Schritte umfaßt:
das Anordnen erster Elemente (10) in Öffnungen, die an der ersten und der zweiten planen Fläche der Platte (P) vorhanden sind, und das Anbringen von Verbindungselementen an den ersten Elementen (20; 30), die sich an der ersten planen Fläche der Platte (P) befinden;
das Bereitstellen von Haltefassungen (40) an der ersten und der zweiten planen Fläche des Körpers (R) und das Anbringen von Verbindungselementen (20; 30) an den Haltefassungen der zweiten planen Fläche des Körpers (R); und
das Zusammendrücken des Körpers (R) und der Platte (P), so daß die an den ersten Elementen an der ersten planen Fläche der Platte (P) angebrachten Verbindungselemente (20; 30) mit den an der ersten planen Fläche des Körpers (R) vorhandenen Haltefassungen (40) verbunden werden, und die an den Haltefassungen an der zweiten planen Fläche des Körpers (R) angebrachten Verbindungselemente (20; 30) mit den ersten Elementen an der zweiten planen Fläche der Platte (P) verbunden werden, so daß der Körper (R) an der Platte (P) befestigt wird.

## Revendications

1. Système de fixation pour fixer un corps (R) à un panneau (P), comprenant :
(i) plusieurs premiers éléments (10) destinés à être placés dans des trous d'un panneau (P) ;
(ii) plusieurs structures de retenue (40) placées sur la surface d'un corps (R) devant être fixé au panneau (P) ; et
(iii) au moins un second élément de raccord (30) conformé de manière à former une fixation amovible à ajustement serré au premier élément (10) et une fixation à ajustement glissant à la structure de retenue (40), caractérisé en ce qu'il comprend par ailleurs
(iv) au moins un premier élément de raccord (20) conformé de manière à former une fixation de blocage à ajustement serré au premier élément (10) et une fixation à ajustement glissant à la structure de retenue (40),
le panneau (P) et le corps (R) comprenant chacun des première et seconde surfaces planes inscrivant un angle l'une avec l'autre et le système comprenant au moins un premier élément (10) sur chaque surface plane du panneau (P), au moins une structure de retenue (40) sur chaque surface plane du corps (R), au moins un premier élément de raccord (20) destiné à se fixer à blocage audit au moins un premier élément (10) et à se fixer à ladite au moins une structure de retenue (40a) se trouvant sur la première surface plane du panneau (P) et sur celle du corps (R), respectivement, et au moins un second élément de raccord (30) destiné à se fixer de manière amovible à un premier élément (10) et à se fixer à une structure de retenue (40b) se trouvant sur la seconde surface plane du panneau (P) et sur celle du corps (R), respectivement.

2. Composants de fixation destinés à être utilisés dans le système de fixation de la revendication 1, les composants comprenant :
(i) un premier élément (10) destiné à être placé dans un trou réalisé dans un panneau (P) ;
(ii) une structure de retenue (40) destinée à être fixée à la surface d'un corps (R) devant être fixé au panneau (P) ; et
(iii) un second élément de raccord (30) conformé de manière à former une fixation amovible à ajustement serré au premier élément (10) et une fixation à ajustement glissant à la structure de retenue (40), caractérisés en ce qu'ils comprennent par ailleurs
(iv) un premier élément de raccord (20) conformé de manière à former une fixation de blocage à ajustement serré au premier élément (10) et une fixation à ajustement glissant à la structure de retenue (40).

3. Procédé de fixation d'un corps (R) à un panneau (P), le corps (R) et le panneau (P) comprenant chacun des première et seconde surfaces planes inscrivant un angle l'une avec l'autre, le procédé mettant en oeuvre plusieurs dispositifs de fixation, chaque dispositif de fixation comprenant :
(i) un premier élément (10) destiné à être placé dans un trou réalisé dans un panneau (P) ;
(ii) une structure de retenue (40) destinée à être fixée à la surface d'un corps (R) devant être fixé au panneau (P) ; et
(iii) un élément de raccord (20 ; 30) conformé de manière à former une fixation amovible à ajustement serré au premier élément (10) et une fixation à ajustement glissant à la structure de retenue (40), le panneau (P) et le corps (R) comprenant chacun des première et seconde surfaces planes inscrivant un angle l'une avec l'autre, le procédé comprenant les étapes de
mise en place de premiers éléments (10) dans des trous réalisés dans chacune des première et seconde surfaces planes du panneau (P) et de fixation d'éléments de raccord (20 ; 30) aux premiers éléments placés sur la première surface plane du panneau (P) ;
pose de structures de retenue (40) sur les première et seconde surfaces planes du corps (R) et fixation d'éléments de raccord (20 ; 30) aux structures de retenue de la seconde surface plane du corps (R) ; et
serrage du corps (R) et du panneau (P) l'un contre l'autre de façon que les éléments de raccord (20 ; 30) fixés aux premiers éléments situés sur la première surface plane du panneau (P) se fixent aux structures de retenue (40) posées sur la première surface plane du corps (R) et que les éléments de raccord (20 ; 30) fixés aux structures de retenue (40) situées sur la seconde surface plane du corps (R) se fixent aux premiers éléments situés sur la seconde surface plane du panneau (P), de façon que le corps (R) soit fixé au panneau (P).
